# EUROPÄISCHE PATENTANMELDUNG

(11) **EP 0 799 781 A2**
(43) Veröffentlichungstag der Anmeldung: **08.10.1997**
(21) Anmeldenummer: 97104630.5
(22) Anmeldetag: 18.03.1997
(51) Int. Cl.: B65G 57/30

(54) **Vorrichtung zum Stapeln von Platten**

(30) Priorität: 04.04.1996 DE 19613653
(71) Anmelder: Rygol-Dämmstoffwerk Werner Rygol KG, 93351 Painten (DE)
(72) Erfinder: Hackner, Karl-Heinz, 93351 Painten (DE)
(74) Vertreter: Schütz, Peter, Dipl.-Ing.

(57) **Zusammenfassung**

Eine Plattenstapelvorrichtung enthält eine Hubplatte (8), auf welche Platten (2) einzeln von einem Gurtförderer (4) transportiert werden, wobei sie durch Anstoßen an einen Anschlag (22) in die richtige Position gebracht werden. Ein Exzenterantrieb (18) erlaubt ein Anheben der vertikal beweglich gelagerten Hubplatte (8), wodurch die auf ihr liegende Platte (2) zwischen ein Paar Plattenhalter (24) angehoben und dort festgehalten wird, wenn die Hubplatte sich wieder absenkt. Ein so von unten aufgebauter Plattenstapel (26) wird mit Hilfe einer Schieberplatte (28) seitlich aus den Plattenhaltern heraus zum Abtransport auf eine Anlagefläche geschoben. Der Antrieb der Schieberplatte (28) erlaubt bei ihrem Rücklauf ein Anheben über bereits neue in die Plattenhalter eingeschobene Platten.

## Beschreibung

Die Erfindung betrifft eine Vorrichtung mit den im Oberbegriff des Anspruchs 1 angegebenen Merkmalen.

Es ist allgemein üblich, Platten dadurch zu stapeln, daß man sie, etwa auf einer Palette, übereinanderschichtet, bis eine gewünschte Stapelhöhe erreicht ist, und dann in geeigneter Weise zum Abtransport zu fixieren, etwa durch Umgurten. Will man Styroporplatten stapeln, die relativ empfindlich gegen mechanische Beschädigungen sind, dann muß diese Art des Stapelns vorsichtig ausgeführt werden, was mit entsprechendem Zeitaufwand verbunden ist.

Aus der DE-AS 1 079 522 ist eine Maschine zum selbsttätigen Stapeln von Rohlingen für Platten bekannt, bei welcher die Plattenrohlinge auf einem aus zwei parallelen Fördergurten bestehenden Förderer über eine von einem Pneumatikzylinder angetriebene Hubplatte geführt werden und dort gegen einen Anschlag mit einem Sensor stoßen, der eine Betätigung des Pneumatikzylinders und damit ein Anheben der Hubplatte veranlaßt. Dadurch wird die Platte nach oben zwischen beiderseitige Spannbacken angehoben, wo sie nach dem anschließenden Absenken der Hubplatte festgehalten werden. Von der nächsten angeförderten und angehobenen Platte wird die bereits zwischen den Spannbacken befindliche Platte ein Stück weiter nach oben geschoben, und auf diese Weise wird von unten ein Plattenstapel aufgebaut, der bei Erreichen einer gewünschten Höhe oben gegen einen weiteren Sensor stößt. Dadurch wird ein Lösen der Spannbacken veranlaßt, so daß der Stapel mit dem Absinken der Hubplatte nach unten auf den kontinuierlich umlaufenden Gurtförderer abgelegt wird und von diesem zu einem zweiten Gurtförderer transportiert wird, der bei jedem neuen Stapel schrittweise weiterbewegt wird und als Vorratsförderer dient.

Weiterhin ist aus der DE 44 28 257 C2 eine Vorrichtung zum Tiefziehen von Behältern aus thermoplastischer Kunststoffolie sowie zum Vereinzeln und Stapeln der Behälter bekannt, bei welcher die Behälterstapel ebenfalls von unten her aufgebaut werden und nach Erreichen einer gewünschten Höhe seitlich auf ein Abtransportband geschoben werden. Auch ist es aus dem DBGM 87 09 053.8 bekannt, seitlich angeförderte Flachpackungen in einen Schacht einzubringen, in welchem sich zwei umlaufende Bürstenbänder gegenüberliegen, welche die nacheinander eingebrachten Packungen nach unten transportieren, wo sie auf einem sich bildenden Stapel abgelegt werden, während die Bürstenbänder weiterlaufen können. Aus dem Lehrbuch "Getriebetechnik" von J. Volmer, VEB Verlag Technik Berlin (1972), sind weiterhin oszillierende Exzenterantriebe bekannt, bei denen ein den Exzenter bildendes Bogendreieck zwischen zwei Platten umläuft, welche die Rotationsbewegung der Exzenterwelle in eine lineare hin- und hergehende Bewegung umwandeln.

Der Erfindung liegt die Aufgabe zugrunde, eine Vorrichtung zum Stapeln, insbesondere von empfindlichen Styroporplatten, anzugeben, welche mit sehr exakter Steuerung eine kontinuierliche Plattenzuführung ohne Unterbrechung durch das Entfernen der fertigen Plattenstapel bei hoher Arbeitsgeschwindigkeit und Schonung der Platten erlaubt.

Diese Aufgabe wird durch die im Anspruch 1 angegebene Vorrichtung gelöst. Weiterbildungen der Erfindung sind in den Unteransprüchen gekennzeichnet.

Durch den Stapelaufbau von unten unter schrittweisem Anheben der den Stapel bildenden Platten und unter Vermeidung ruckartiger Bewegungen werden die Platten nicht nur äußerst schonend behandelt, sondern beim Entfernen der Plattenstapel aus der Vorrichtung braucht die Zuführung neuer zu stapelnder Platten nicht unterbrochen zu werden, so daß man praktisch einen kontinuierlichen Betrieb erhält, wie es im Falle einer vorgeschalteten Plattenbearbeitungsmaschine mit kontinuierlichem Ausstoß anschließend zu stapelnder Platten im Interesse gleichmäßiger Taktzeiten erwünscht ist.

Das Grundprinzip der Erfindung ist jedoch nicht auf Styroporplatten beschränkt, sondern bei geeigneter Ausbildung der seitlichen Plattenhalter, zwischen welche die einzeln herangeführten Platten durch die Hubvorrichtung angehoben werden, lassen sich auch schwerere Platten, etwa Preßspanplatten oder dgl., auf die angegebene Weise von unten her zu Stapeln zusammenfassen und bei gewünschter Stapelhöhe seitlich aus den Haltern herausschieben, um dann zu einer Umhüllungs- oder Umgurtungsstation transportiert zu werden. Beim im vorliegenden Falle betrachteten Stapeln von Styroporplatten sind die Halter zweckmäßigerweise in Form von Bürstenpaaren ausgebildet, deren Borsten die relativ leichten Platten ohne Beschädigungen halten können und auch dem Herausschieben mit Hilfe einer Schieberplatte keinen die Platte beschädigenden Widerstand entgegensetzen.

Der Exzenterantrieb für die einzelnen Platten zwischen die Halter hebenden Hubplatte wandelt nach Art bekannter Kulissen- oder Kurbeltriebe eine von einem Antriebsmotor gelieferte Rotationsbewegung in eine hin- und hergehende Bewegung um, die in den Phasen der Plattenabnahme vom Gurtförderer und Plattenabgabe an den Stapel verlangsamt und damit besonders plattenschonend verläuft. Ein Getriebebremsmotor zum Antrieb der Exzenterscheiben, die in einer Kulissenführung sitzen und diese hin- und herschieben oder die über Pleuelhebel mit einer Hubplatte verbunden sind, erlaubt eine exakte Steuerung der Hubbewegung und Hubplattenposition.

Eine zweckmäßige Konstruktion für eine Kombination der Plattenzuführung mit dem Anheben der Platten besteht darin, den die Platten zuführenden Förderer als Gurtförderer auszubilden und die Hubplatte entweder zweigeteilt auf beiden Seiten eines oder zweier mittlerer Fördergurte oder einteilig zwischen zwei in gegenseitigem Abstand laufenden Fördergurten anzuordnen. In beiden Fällen lassen sich die Platten bis zu einem Anschlag in der Stapelvorrichtung schieben, der sie in einer vorbestimmten Position hält, von welcher aus sie dann von der Hubplatte angehoben und zwischen die Plattenhalter geschoben werden. Bis die nächste Platte herangeführt wird, hat sich die Hubplatte dann wieder abgesenkt, um die nächste ankommende Platte aufzunehmen. Wird diese dann zwischen die Halter gehoben, so schiebt sie die bereits über ihr gestapelten Platten um eine Plattendicke weiter nach oben, und dies setzt sich solange fort, bis die gewünschte Stapelhöhe erreicht ist, was sich beispielsweise durch einen Sensor feststellen läßt. Dann wird die Bewegung einer seitlichen Schieberplatte ausgelöst, welche den ganzen Plattenstapel aus den Haltern herausschiebt, was gleichzeitig mit dem Auflaufen der nächstfolgenden Einzelplatte auf die Hubplatte erfolgen kann, ohne daß deren Hubtakt dabei unterbrochen oder geändert werden müßte.

Damit die Schieberplatte beim Rücklauf in ihre Ausgangsstellung nicht die bereits von unten zwischen die Halter nachgeschobene neue Platte beschädigt, ist es zweckmäßig, sie für den Rücklauf anzuheben, so daß sie über die bereits zwischen den Haltern befindliche(n) Platte(n) des neuen Stapels herübergehoben wird. Das Herausschieben des Plattenstapels kann je nach Auslegung der Maschine in Richtung der Zuführung der Einzelplatten oder auch quer dazu erfolgen, wobei man Anordnung und Orientierung der seitlichen Plattenhalter entsprechend der gewünschten Ausschieberichtung für den Plattenstapel wählen wird.

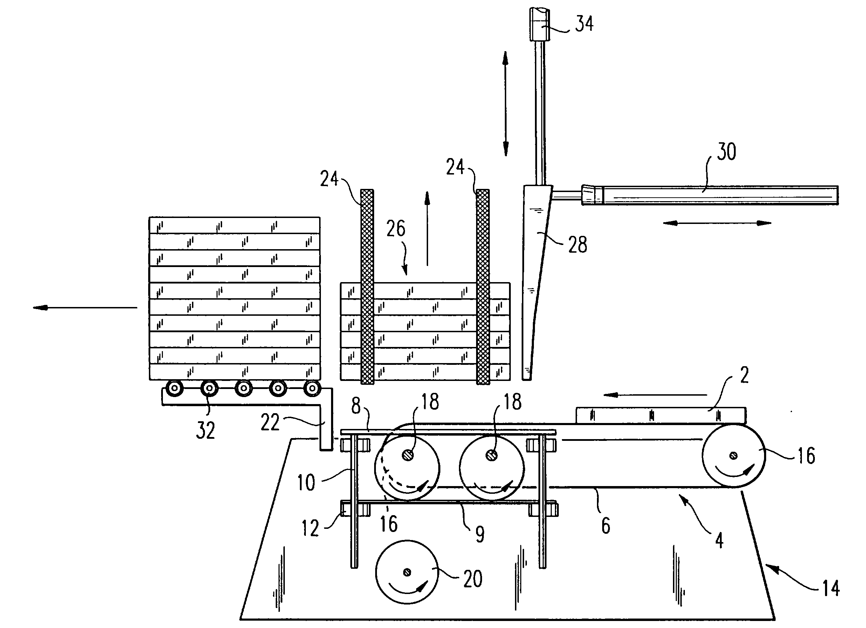

Die Erfindung sei nun anhand eines in der beiliegenden Zeichnung rein schematisch dargestellten Ausführungsbeispiels näher erläutert.

Man erkennt in der Figur eine von einer nicht dargestellten Bearbeitungsmaschine wie etwa einer Plattenfräsmaschine zugeführte Platte 2, die am Anfang eines Gurtförderers 4 liegt und in Pfeilrichtung der Stapelvorrichtung zugeführt wird. Der Gurtförderer besteht im beschriebenen Ausführungsbeispiel aus zwei parallel laufenden Förderkeilriemen 6, von denen in der Figur nur der vordere zu erkennen ist. Die beiden Förderkeilriemen unterstützen die Platte 2 in der Nähe ihrer beiderseitigen Enden und verlaufen in der Stapelvorrichtung beiderseits einer Hubplatte 8, die mit vier senkrechten, als Präzisionswellen ausgebildeten Säulen in vier Doppellinearlagern in senkrechter Richtung parallel verschieblich gelagert ist. Die Lager 12, die z.B. als Wälzlager oder Gleitlager ausgebildet sein können, sind ebenso wie die übrigen Teile der Vorrichtung in einem Maschinenrahmen 14 befestigt.

In diesem Maschinenrahmen sind ferner die Umlenkrollen 16 des Gurtförderers 4 gelagert, sowie Exzenterscheiben 18 des Hubmechanismus für den Antrieb der Hubplatte 8 sowie ein Getriebebremsmotor 20, der die Exzenterscheiben 18 antreibt. Die Verbindung der Exzenterscheiben 18 mit der Hubplatte 8 erfolgt durch eine Kulissenführung aus zwei parallelen Platten 8 und 9, deren obere im dargestellen Ausführungsbeispiel die Hubplatte 8 ist und deren untere Kulissenplatte 9 in einem festen Abstand, der gleich dem Durchmesser der kreisförmigen Exzenterscheiben ist, von der Hubplatte 8 angeordnet ist, so daß diese beiden Platten 8, 9 parallele Tangenten der Exzenterscheiben bilden. Drehen sich diese aus der gezeichneten Lage einmal herum, so wird durch diese Doppelplatten-Zwangsführung der so gebildeten Kulisse die Hubplatte 8 zunächst durch die Exzenterscheiben um einen Hub von der doppelten Exzentrizität nach oben gedrückt, wobei sie eine auf ihr liegende Platte 2 zwischen die Plattenhalter 24 hebt und wobei die untere Kulissenplatte 9 mitgenommen wird, und dann drücken die Exzenterscheiben 18 die untere Kulissenplatte 9 nach unten in die dargestellte Ausgangslage, wobei wiederum die obere Hubplatte mitgenommen wird. Die gegenseitige Fixierung der Platten 8 und 9 im Abstand des Exzenterscheibendurchmessers erfolgt durch geeignete mechanische Mittel. Man kann die Übertragung der Exzenterbewegung aber auch über pleuelähnliche Stangen, die an der Hubplatte und an exzentrischen Zapfen der Exzenterscheibe 18 angelenkt sind, realisieren. Wieviel Exzenterscheiben man in der Praxis benutzt, hängt von konstruktiven Notwendigkeiten ab. Statt der dargestellten Doppelanordnung kann auch eine einfache Zwillingsanordnung mit je einer auf einer gemeinsamen Antriebswelle sitzenden Exzenterscheibe an beiden Seitenbereichen der Hubplatte 8 genügen, wenn deren Hublagerung die Parallelführung auch dann garantiert. Es können auch zwei separate Hubplatten 8 beiderseits bzw. außerhalb der Fördergurte oder Keilriemen 6 vorgesehen sein, die dann von je einer Exzenterscheibe bei der dargestellten Doppelanordnung mit zwei Exzenterscheiben 18 mittels der erläuterten Kulissenführung angetrieben werden.

In der Zeichnung links von der Hubplatte 8 erkennt man einen Anschlag 22, bis zu dem die Platten 2 einzeln von dem Förderriemen 6 transportiert werden und dort anstoßen. Oberhalb der Hubplatte 8 sind zwei Paare von Plattenhaltern 24 angeordnet, die als Bürstenpaare ausgebildet sind und mit ihren Borsten die Platten 2 halten, die zwischen ihnen einen Stapel 26 bilden, der in Richtung des eingezeichneten Pfeils von unten nach oben wächst. Hat dieser Stapel eine vorbestimmte Höhe erreicht, dann wird der Antrieb einer Schieberplatte 28 ausgelöst, die von einem Pneumatikzylinder 30 nach links bewegt wird und den Plattenstapel 26 aus den Bürsten der Plattenhalter 24 heraus auf eine Rollenunterlage 32 schiebt, von wo er zu beispielsweise einer Verpackungsanlage abtransportiert werden kann.

Während dieses Herausschiebens des Plattenstapels 26 aus den Plattenhaltern 24 kann gleichzeitig eine neue Platte 2 von den Förderkeilriemen 6 auf die Hubplatte 8 bis zum Anstoßen am Anschlag 22 befördert werden und beim nächsten Hub der Hubplatte zwischen die Plattenhalter 24 zwischen deren Bürsten gehoben werden, wo sie von den Borsten festgehalten wird. Damit die Schieberplatte 28 beim Rücklauf nicht an diese Platte anstößt, ist ein weiterer Pneumatikzylinder 34 vorgesehen, mit dem die Schieberplatte angehoben werden kann und, nachdem sie von dem Pneumatikzylinder 30 wieder zurückgezogen ist, wieder in die dargestellte Ausgangsposition abgesenkt werden kann. Die beiden Pneumatikzylinder 30 und 34 sind hier ebenfalls nur schematisch zusammen mit den Bewegungsrichtungen für die Schieberplatte 28 angedeutet. Bei einer praktischen Konstruktion würde beispielsweise der Zylinder 30 einen Schlitten antreiben, auf dem der Mechanismus für das Heben und Senken der Schieberplatte 28 montiert ist, oder umgekehrt.

Bei einer praktischen Ausführungsform der Erfindung wurden aus einer Fräsmaschine kommende Styroporplatten mit Abmessungen von 1000 mm x 500 mm und einer Plattendicke von 60 mm mit einer Taktzeit von 50 Stück pro Minute, bei Abmessungen von 500 mm x 500 mm und gleicher Plattendicke mit einer Taktzeit von 74 Stück pro Minute zugeführt und bis zu einer Höhe von maximal 500 mm gestapelt. Der Hub der Hubplatte 8 betrug 205 mm.

## Patentansprüche

1. Vorrichtung zum Stapeln von Platten mit
- einem die Platten (2) von einer Zuführstation bis zu einem Anschlag (22) in der Stapelvorrichtung transportierenden Gurtförderer (4),
- einer die jeweils zugeführte Platte (2) vom Gurtförderer (4) abhebenden Hubvorrichtung (8,18),
- beiderseits der Hubvorrichtung angeordneten, die abgehobenen Platten übernehmenden Plattenhaltern (24), zwischen denen die Platten unter Bildung eines Stapels (26) schrittweise nach oben bewegt werden,
- und einem Stapelentferner (28) zum Abführen fertiger Plattenstapel,
**dadurch gekennzeichnet,** daß die Hubvorrichtung (8,18) einen von einem Getriebebremsmotor (20) angetriebenen Exzenter (18) aufweist.

2. Vorrichtung nach Anspruch 1, **dadurch gekennzeichnet**, daß der Gurtförderer (4) zwei im Abstand voneinander angeordnete umlaufende Förderriemen (6) zur beiderseitigen Auflage der Platten (2) enthält, und daß die Hubvorrichtung mindestens eine zwischen den oder außerhalb der Förderriemen angeordnete, parallel geführte Hubplatte (8) enthält, die mit dem Exzenterantrieb (18) verbunden ist.

3. Vorrichtung nach Anspruch 2, **dadurch gekennzeichnet**, daß der Exzenterantrieb als Pleuel- oder Gleichdickantrieb ausgebildet ist.

4. Vorrichtung nach Anspruch 3, **dadurch gekennzeichnet**, daß das Gleichdick durch mindestens eine Exzenterscheibe (16) ausgebildet ist.

5. Vorrichtung nach Anspruch 4, **dadurch gekennzeichnet**, daß die Exzenterscheibe (16) eine exzentrisch gelagerte Kreisscheibe ist, deren Umfangsbewegung von zwei Gleitplatten (8,9) abgegriffen wird.

6. Vorrichtung nach Anspruch 2, **dadurch gekennzeichnet**, daß die Parallelführung der Hubplatte durch insbesondere vier Gleitlager oder Wälzlager gebildet wird.

7. Vorrichtung nach Anspruch 1, **dadurch gekennzeichnet**, daß der Stapelentferner einen zwischen die Plattenhalter (24) bewegbaren Abschieber (Schieberplatte 28) enthält, der den Plattenstapel (26) aus den Haltern (24) heraus auf eine Abtransportfläche (Rollenunterlage 32) schiebt.

8. Vorrichtung nach Anspruch 7, **dadurch gekennzeichnet**, daß der Abschieber eine senkrecht angeordnete, seitlich verschiebbare Schieberplatte (28) enthält, deren Länge mindestens gleich der maximalen Stapelhöhe ist, die zum Rücklauf in ihre Ausgangsposition anhebbar ist.

9. Vorrichtung nach Anspruch 8, **gekennzeichnet durch** einen Zylinder/Kolben-Antrieb (30 bzw. 34) für die Verschiebung und/oder Anhebung der Schieberplatte (28).

10. Vorrichtung nach Anspruch 2, **dadurch gekennzeichnet**, daß die Förderriemen als Keilförderriemen (6) ausgebildet sind.

11. Vorrichtung nach Anspruch 1, **dadurch gekennzeichnet**, daß die Plattenhalter (24) gegenüberliegende Bürstenpaare aufweist, deren Bürstenlänge mindestens so groß wie die maximale Stapelhöhe ist.
